(19) Europäisches Patentamt
European Patent Office
Office européen des brevets

(11) **EP 4 477 770 A1**

(12) **EUROPEAN PATENT APPLICATION**
published in accordance with Art. 153(4) EPC

(43) Date of publication:
**18.12.2024 Bulletin 2024/51**

(21) Application number: **22933615.1**

(22) Date of filing: **31.10.2022**

(51) International Patent Classification (IPC):
**C21D 9/46** (2006.01)     **C22C 38/00** (2006.01)
**C22C 38/14** (2006.01)     **C22C 38/60** (2006.01)

(52) Cooperative Patent Classification (CPC):
**C21D 9/46; C22C 38/00; C22C 38/14; C22C 38/60**

(86) International application number:
**PCT/JP2022/040837**

(87) International publication number:
**WO 2023/181485 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2022   JP 2022048791**

(71) Applicant: **JFE Steel Corporation**
**Tokyo 100-0011 (JP)**

(72) Inventors:
• **YOSHIOKA, Shimpei**
  **Tokyo 100-0011 (JP)**
• **HATA, Katsuya**
  **Tokyo 100-0011 (JP)**
• **KIMURA, Hideyuki**
  **Tokyo 100-0011 (JP)**

(74) Representative: **Haseltine Lake Kempner LLP**
**One Portwall Square**
**Portwall Lane**
**Bristol BS1 6BH (GB)**

(54) **STEEL SHEET, MEMBER, METHOD FOR PRODUCING SAID STEEL SHEET AND METHOD FOR PRODUCING SAID MEMBER**

(57)     Provided is a steel sheet having a chemical composition with Si content of 1.0 mass% or less, where there is little concern about LME cracking, that simultaneously achieves a TS of 1470 MPa or more, excellent formability, and excellent delayed fracture resistance. The steel sheet has a defined chemical composition, a complex microstructure consisting mainly of martensite and bainite, the maximum size of carbides inside martensite is 400 nm or less, a number density of bainite is $120 \times 10^{-4}/\mu m^2$ or more, and a number ratio of bainite having an aspect ratio of 1.8 or more is 60 % or more.

**EP 4 477 770 A1**

**Description**

TECHNICAL FIELD

The present disclosure relates to a steel sheet, a member, and methods of producing same.

BACKGROUND

In recent years, the application of high strength steel sheets to automotive body frame components has been increasing due to further need for weight reduction of automotive bodies.

As an example of such a high strength steel sheet, Patent Literature (PTL) 1 describes:

"a high strength steel sheet comprising a chemical composition containing, in mass%, C: 0.16 % or more and 0.72 % or less, Si: 3.0 % or less, Mn: 0.5 % or more and 3.0 % or less, P: 0.1 % or less, S: 0.07 % or less, Al: 3.0 % or less, and N: 0.010 % or less, where Si + Al is 0.7 % or more, with the balance being Fe and inevitable impurity, wherein as the steel sheet microstructure, an area fraction of martensite to the entire steel sheet microstructure is 10 % or more and 90 % or less, an amount of retained austenite is 5 % or more and 50 % or less, an area fraction of bainitic ferrite in upper bainite to the entire steel sheet microstructure is 5 % or more, the sum of the area fraction of martensite to the entire steel sheet structure, the amount of retained austenite, and the area fraction of bainitic ferrite in upper bainite to the entire steel sheet microstructure is 60 % or more, and an area fraction of polygonal ferrite to the entire steel sheet microstructure is 10 % or less (inclusive of 0 %), average C content in the retained austenite is 0.70 % or more and 2.00 % or less, and tensile strength is 980 MPa or more."

PTL 2 describes:

"a high strength steel sheet comprising a chemical composition containing, in mass%, C: 0.17 % or more and 0.73 % or less, Si: 3.0 % or less, Mn: 0.5 % or more and 3.0 % or less, P: 0.1 % or less, S: 0.07 % or less, Al: 3.0 % or less, and N: 0.010 % or less, where Si + Al is 0.7 % or more, with the balance being Fe and inevitable impurity, wherein as the steel sheet microstructure, an area fraction of a sum of lower bainite and total martensite to the entire steel sheet microstructure is 10 % or more and 90 % or less, an amount of retained austenite is 5 % or more and 50 % or less, an area fraction of bainitic ferrite in upper bainite to the entire steel sheet microstructure is 5 % or more, of the sum of lower bainite and total martensite, quenched martensite is 75 % or less, and an area fraction of polygonal ferrite to the entire steel sheet structure is 10 % or less (inclusive of 0 %), average C content in the retained austenite is 0.70 % or more, and tensile strength is 980 MPa or more."

PTL 3 describes:

"a high strength steel sheet having excellent hydrogen embrittlement resistance and tensile strength of 1180 MPa or more comprising a chemical composition containing C: 0.15 % to 0.25 % (meaning mass%, the same applies hereinafter) Si: 1 % to 2.5 %, Mn: 1.5 % to 3 %, P: 0.015 % or less, S: 0.01 % or less, Al: 0.01 % to 0.1 %, N: 0.01 % or less, with the balance being iron and inevitable impurity,
wherein relative to the entire metallic microstructure, a total of bainite, bainitic ferrite, and tempered martensite is 85 area% or more, retained austenite is 1 area% or more, and fresh martensite is 5 area% or less (inclusive of 0 area%)."

PTL 4 describes:

"a high strength cold-rolled steel sheet comprising a chemical composition containing, in mass%, C: more than 0.140 % and less than 0.400 %, Si: more than 0.35 % and less than 1.50 %, Mn: more than 1.50 % and less than 4.00 %, P: 0.100 % or less, S: 0.010 % or less, Al: 0.100 % or less, N: 0.0100 % or less, Ti: 0 % or more and less than 0.050 %, Nb: 0 % or more and less than 0.050 %, V: 0 % or more and 0.50 % or less, Cr: 0 % or more and 1.00 % or less, Mo: 0 % or more and 0.50 or less, B: 0 % or more and 0.0100 % or less, Ca: 0 or more and 0.0100 % or less, Mg: 0 % or more and 0.0100 % or less, REM: 0 % or more and 0.0500 % or less, and Bi: 0 % or more and 0.050 % or less, with the balance being Fe and inevitable impurity, wherein
microstructure at 1/4 of the thickness from the surface contains, in volume fraction, 70.0 % or more of tempered martensite, more than 3.0 % and less than 10.0 % of retained austenite, a total of 25.0 % or less of ferrite and bainite, and 5.0 % or less of martensite,
microstructure at 25 μm from the surface contains, in volume fraction, a total of 70 % or more of ferrite and bainite, and a total of 30 % or less of martensite and tempered martensite,

at 25 μm from the surface, average particle size of martensite and tempered martensite is 5.0 μm or less, and tensile strength is 1310 MPa or more, uniform elongation is 5.0 % or more, and R/t, the ratio of limit bending radius R to thickness t in 90° V-bending, is 5.0 or less."

CITATION LIST

Patent Literature

PTL 1: JP 2010-065272 A

PTL 2: JP 5365112 B2

PTL 3: JP 5412182 B2

PTL 4: JP 6635236 B2

SUMMARY

(Technical Problem)

Conventionally, when applying high strength steel sheets to automotive body frame components, application of high strength steel sheets by hot press forming, in which steel sheets are heated and pressed, has been vigorously studied. Recently, however, the application of high strength steel sheets by cold press forming (hereinafter also referred to as cold pressing) is being considered once again from the viewpoints of cost and productivity.

When high strength steel sheets, in particular steel sheets having a tensile strength (hereinafter also referred to as TS) of 1470 MPa or more, are cold pressed, the steel sheets are prone to press cracking due to insufficient formability, in particular insufficient ductility. Therefore, the application of high strength steel sheets to cold pressing is currently limited to components having relatively simple shapes.

Further, when steel sheets having a TS of 1470 MPa or more are cold pressed into components, delayed fracture becomes apparent due to increased residual stress in the component and deterioration of delayed fracture resistance of the material itself. Here, delayed fracture is a phenomenon that leads to failure as follows. When a component is placed in a hydrogen entry environment with high stress applied to the component, hydrogen enters the component. This causes a decrease in interatomic bonding strength and causes local deformation, which result in microcracks, which propagate and lead to fracture.

Here, the high strength steel sheets described in PTL 1 and 2 contain a large amount of retained austenite (hereinafter also referred to as retained γ) in the steel microstructure by adding a large amount of Si or Al and suppressing carbide formation. This improves ductility. However, retained γ may transform to hard martensite during cold pressing, which may become a stress concentrated region and contribute to delayed fracture.

The high strength steel sheet described in PTL 3 also uses retained γ to improve ductility. Therefore, as mentioned above, retained γ may transform to hard martensite during cold pressing, which may become a stress concentrated region and contribute to delayed fracture.

Further, recently, when spot-welding is applied to high strength steel sheets having a galvanized layer on a surface (for example, hot-dip galvanized steel sheets and galvannealed steel sheets) when assembling automotive body and components for automobiles, liquid metal embrittlement cracking (LMEC, hereinafter also referred to as LME cracking) has been observed to occur at welded portions. Here, LME cracking occurs when the zinc in the galvanized layer melts during spot welding, causing molten zinc to enter a crystal grain boundary of the steel microstructure at the welded portion, and stress caused when the welding electrode pressure is released acts to cause cracking. In particular, the risk of LME cracking is a concern for steel sheets having a TS of 780 MPa or more, and even more so for steel sheets having a TS of 1470 MPa or more, because of their typically high Si content. Even when a steel sheet is not galvanized, molten zinc from a galvanized steel sheet may come in contact with the steel sheet during spot welding with the galvanized steel sheet, causing LME cracking.

LME cracking is more likely to occur the higher the Si content of the steel sheet chemical composition. In this regard, for example, in the high strength steel sheet described in PTL 3, from the viewpoint of securing the retained γ mentioned above, a large amount of Si is required, and specifically, Si content is 1 mass% to 2.5 mass%. Therefore, for the high strength steel sheet described in PTL 3, the occurrence of LME cracking is a strong concern in addition to the occurrence of delayed fracture as described above.

Further, in the high strength steel sheet described in PTL 4, ferrite and bainite are formed in the surface layer. As a result, C is enriched in untransformed austenite surrounding the ferrite and bainite, and martensite formed from the untransformed austenite is very hard. As a result, these risk becoming stress concentrated areas and contributing to delayed fracture.

Thus, at present, it cannot be said that a steel sheet having a chemical composition with Si content of 1.0 mass% or less, where there is little concern about LME cracking, that simultaneously achieves a TS of 1470 MPa or more, excellent formability, and excellent delayed fracture resistance has been achieved, and there is a strong demand for development of such a steel sheet.

The present disclosure was developed in view of the above requirements, and it would be helpful to provide a steel sheet that has a chemical composition with Si content of 1.0 mass% or less, where there is little concern about LME cracking, and that simultaneously achieves a strength of TS: 1470 MPa or more, excellent formability, and excellent delayed fracture resistance, together with an advantageous method of producing same.

Further, it would be helpful to provide a member using the steel sheet as a material and a method of producing same.

(Solution to Problem)

The inventors engaged in extensive studies and made the following discoveries.

(i) To simultaneously achieve TS of 1470 MPa or more, excellent formability, and excellent delayed fracture resistance, it is effective to decrease Si content to 1.0 % or less and decrease equivalent carbon content Ceq, expressed as $[C\%] + [Si\%] / 24 + [Mn\%] / 6$, as much as possible. Further, in order to obtain a steel sheet having a TS of 1470 MPa or more and excellent formability, especially ductility, with such a low equivalent carbon content Ceq chemical composition (hereinafter also referred to as low Ceq chemical composition), it is effective to have a complex structure utilizing bainite as soft phase and martensite as hard phase.

(ii) In the complex structure described above, simultaneously satisfying the following points is important.

- Suppressing coarsening of carbides in martensite, especially inside tempered martensite, and specifically, making the maximum size of carbides inside martensite be 400 nm or less.

- Controlling the morphology and distribution state of bainite, in particular increasing the number density of island regions of bainite and increasing the number of island regions of bainite having an aspect ratio of 1.8 or more.

This makes it possible to achieve excellent delayed fracture resistance in addition to a TS of 1470 MPa or more and excellent formability.

(iii) Further, in order to achieve the bainite morphology and distribution state as described above, it is particularly important to simultaneously satisfy the following points in a production process.

- The heating rate to reach annealing temperature is relatively fast.
- The annealing temperature is relatively low in the austenite single phase range, specifically $A_3$ temperature to ($A_3$ temperature + 40 °C).
- During the cooling process after annealing, a certain holding time in a temperature range from 650 °C to 500 °C, where bainite forms, is short.

(iv) Further, in a chemical composition having low equivalent carbon content Ceq, in order to suppress coarsening of carbides inside martensite, it is necessary to increase the cooling rate in a temperature range from 500 °C to 50 °C, where martensite forms, after holding in the above temperature range.

The present disclosure is based on these discoveries and further studies.

Primary features of the present disclosure are as follows.

1. A steel sheet comprising a chemical composition containing (consisting of), in mass%,

C: more than 0.20 % and 0.34 % or less,
Si: 1.0 % or less,
Mn: 1.6 % or more and 2.4 % or less,
P: 0.050 % or less,
S: 0.0050 % or less,

sol.Al: 0.10 % or less,
N: 0.010 % or less,
Ti: more than 0 % and 0.080 % or less, and
B: more than 0 % and 0.0050 % or less,
satisfying the following Expression (1), with the balance being Fe and inevitable impurity,
wherein, in area fractions relative to the entire microstructure,
martensite is more than 60 % and 90 % or less,
bainite is 10 % or more and 30 % or less,
retained austenite is less than 5 %, and
the balance is 5 % or less,
maximum size of carbides inside the martensite is 400 nm or less,
number density of island regions of the bainite is $120 \times 10^{-4}/\mu m^2$ or more,
number of island regions of the bainite having an aspect ratio of 1.8 or more as a percentage of the total number of island regions of the bainite is 60 % or more,
tensile strength is 1470 MPa or more,
uniform elongation is 5.5 % or more, and

$$[C\%] + [Si\%] / 24 + [Mn\%] / 6 \leq 0.70 \qquad \dots (1).$$

2. The steel sheet according to 1, above, wherein the chemical composition further contains at least one element selected from Group A, Group B, or Group A and Group B, in mass%,

Group A consists of
Cu: 1.00 % or less,
Ni: 1.00 % or less,
Mo: 0.50 % or less,
Cr: 1.00 % or less,
Zr: 0.100 % or less,
Ca: 0.0100 % or less,
Nb: 0.100 % or less,
V: 0.200 % or less,
W: 0.200 % or less,
Sb: 0.100 % or less,
Sn: 0.100 % or less, and
Mg: 0.0100 % or less, and
Group B consists of Se, As, Pb, Bi, Zn, Cs, Rb, Co, La, Tl, Nd, Y, In, Be, Hf, Tc, Ta, O, La, Ce, and Pr, totaling 0.02 % or less.

3. The steel sheet according to 1 or 2, above, further comprising a coated or plated layer on a surface.
4. A member formed using the steel sheet according to any one of 1 to 3, above.
5. A method of producing a steel sheet, the method comprising:

a hot rolling process of hot rolling a steel slab having the chemical composition according to 1 or 2, above, to produce a hot-rolled steel sheet;
a cold rolling process of cold rolling the hot-rolled steel sheet to produce a cold-rolled steel sheet;
an annealing process of heating the cold-rolled steel sheet at an average heating rate of 3.5 °C/s or more in a temperature range from 50 °C to an annealing temperature, then annealing at the annealing temperature of $A_3$ temperature to $A_3$ temperature + 40 °C for an annealing time of 30 s or more;
a first cooling process of cooling the cold-rolled steel sheet at an average cooling rate of 10 °C/s or more in a temperature range from the annealing temperature to 650 °C;
a holding process of holding the cold-rolled steel sheet in a temperature range from 650 °C to 500 °C for a holding time of 10 s or more to 200 s or less;
a second cooling process of cooling the cold-rolled steel sheet at an average cooling rate of 70 °C/s or more in a temperature range from 500 °C to 50 °C to a cooling stop temperature of 50 °C or less; and
a tempering process of tempering the cold-rolled steel sheet at a tempering temperature of 150 °C to 250 °C for a tempering time of 30 s or more.

6. The method of producing a steel sheet according to 5, above, further comprising a coating or plating treatment process of subjecting the cold-rolled steel sheet to a coating or plating treatment after the tempering process.

7. A method of producing a member, wherein the steel sheet according to any one of 1 to 3, above, is subjected to at least one of a forming process or a joining process to produce the member.

(Advantageous Effect)

According to the present disclosure, a steel sheet having a chemical composition with Si content of 1.0 mass% or less, where there is little concern about LME cracking, that simultaneously achieves a TS of 1470 MPa or more, excellent formability, and excellent delayed fracture resistance is obtainable. Further, due to the above properties, the steel sheet is also applicable by cold pressing to various components for which complex shapes are required, thereby contributing to increased component strength and weight reduction more advantageously in terms of cost and productivity.

DETAILED DESCRIPTION

The following describes embodiments of the present disclosure.

[1] Steel sheet

First, the chemical composition of a steel sheet according to an embodiment of the present disclosure is described. Hereinafter, although the unit in all chemical compositions is "mass%", this may be indicated simply as "%", unless otherwise specified.

C: more than 0.20 % and 0.34 % or less

C is included from the viewpoint of increasing strength of martensite and securing a strength of TS: 1470 MPa or more. When C content is 0.20 % or less, stably obtaining the defined strength is difficult. The C content is therefore more than 0.20 %. From the viewpoint of stably obtaining TS of 1470 MPa or more, the C content is preferably 0.24 % or more. The C content is more preferably 0.27 % or more. On the other hand, when the C content exceeds 0.34 %, martensite becomes excessively high strength, and delayed fracture resistance degrades. The C content is therefore 0.34 % or less.

Si: 1.0 % or less

As mentioned above, Si content exceeding 1.0 % increases the risk of LME cracking. The Si content is therefore 1.0 % or less. The Si content is preferably 0.9 % or less. The Si content is more preferably 0.7 % or less. Si is a strengthening element due to solid solution strengthening and is effective in suppressing formation of carbides and pearlite during bainite transformation. However, in the steel sheet according to an embodiment of the present disclosure, strength is secured by elements such as C and microstructure control, while formation of carbides and pearlite is suppressed by controlling production conditions. Accordingly, a lower limit of Si content is not particularly limited, and may be 0 %. The Si content is preferably 0.2 % or more.

Mn: 1.6 % or more and 2.4 % or less

Mn is an element that improves hardenability of steel and is included to secure a defined area fraction of martensite. In view of the above, Mn content is 1.6 % or more. The Mn content is preferably 1.8 % or more. However, excessive Mn content may degrade delayed fracture resistance through the formation of coarse MnS and Mn segregation. The Mn content is therefore 2.4 % or less. The Mn content is preferably 2.2 % or less. The Mn content is more preferably 2.0 % or less.

P: 0.050 % or less

P is an element that strengthens steel, but high content degrades spot weldability and delayed fracture resistance. P content is therefore 0.050 % or less. In view of the above, the P content is preferably 0.020 % or less. A lower limit of the P content is not particularly limited. However, decreasing the P content to less than 0.002 % requires significant cost. Therefore, from a cost perspective, the P content is preferably 0.002 % or more.

S: 0.0050 % or less

S degrades delayed fracture resistance through the formation of coarse MnS. S content is therefore 0.0050 % or less. In view of the above, the S content is preferably 0.0030 % or less. The S content is more preferably 0.0020 % or less. A lower limit of the S content is not particularly limited. However, decreasing the S content to less than 0.0002 % requires significant cost. Therefore, from a cost perspective, the S content is preferably 0.0002 % or more.

sol.Al: 0.10 % or less

Al can be included to provide sufficient deoxidation and to decrease inclusions in steel. A lower limit of sol.Al content is not particularly limited and may be 0 %. However, from the viewpoint of stable deoxidation, the sol.Al content is preferably 0.005 % or more. The sol.Al content is more preferably 0.01 % or more. However, when the sol.Al content exceeds 0.10 %, a large amount of Al coarse inclusions are formed and delayed fracture resistance deteriorates. The sol.Al content is therefore 0.10 % or less.

N: 0.010 % or less

N forms coarse nitrides, degrades press formability, and degrades delayed fracture resistance. N content is therefore 0.010 % or less. The N content is preferably 0.0080 % or less. A lower limit of the N content is not particularly limited, and may be 0 %. However, from the viewpoint of industrial implementation, the N content is preferably 0.0005 % or more.

Ti: more than 0 % and 0.080 % or less

Ti forms TiN prior to the formation of BN. This secures solute B and has the effect of stabilizing hardenability. From the viewpoint of achieving these effects, the Ti content is more than 0 %. The Ti content is preferably 0.002 % or more. The Ti content is more preferably 0.005 % or more. The Ti content is even more preferably 0.0100 % or more. However, excessive Ti content causes the formation of large amounts of inclusions such as coarse TiN and TiC, which degrade delayed fracture resistance. The Ti content is therefore 0.080 % or less. The Ti content is preferably 0.060 % or less. The Ti content is more preferably 0.055 % or less.

B: more than 0 % and 0.0050 % or less

B is an element that improves hardenability of steel and has the advantage of increasing martensite formation even at low Mn content. From the viewpoint of obtaining these effects, the B content is more than 0 %. The B content is preferably 0.0002 % or more. The B content is more preferably 0.0005 % or more. The B content is even more preferably 0.0008 % or more. However, when the B content exceeds 0.0050 %, the effects are saturated. The B content is therefore 0.0050 % or less. The B content is preferably 0.0040 % or less. The B content is more preferably 0.0035 % or less.

$$[C\%] + [Si\%] / 24 + [Mn\%] / 6 \leq 0.70 \qquad \ldots (1)$$

As mentioned above, the left side of Expression (1) above corresponds to Ceq, which has been found to correlate with delayed fracture resistance. By setting Ceq to 0.70 or less, excellent delayed fracture resistance is obtainable. Accordingly, Expression (1) is satisfied. A lower limit of Ceq is not particularly limited. For example, Ceq of 0.47 or more may be suitable. The inventors believe that the reason why delayed fracture resistance degrades as Ceq increases is that segregation of C, Si, and Mn at grain boundaries contributes to intergranular fracture, which is a common form of delayed fracture.

Basic composition of the steel sheet according to an embodiment of the present disclosure is described above. The steel sheet according to an embodiment of the present disclosure has a chemical composition including the basic composition above, with the balance being Fe (iron) and inevitable impurity. Here, the steel sheet according to an embodiment of the present disclosure preferably has a chemical composition consisting of the basic composition above, with the balance being Fe and inevitable impurity. In addition to the above basic composition, the steel sheet according to an embodiment of the present disclosure may contain one or more elements selected from the following optionally added components. The effects of the present disclosure are obtainable whenever the content of the following optionally added components is equal to or less than the upper limits indicated below, and therefore there is no particular need to set a lower limit. Further, when any of the optionally added components listed below are contained at less than a preferred lower limit described below, the component is included as inevitable impurity.

Cu: 1.00 % or less,
Ni: 1.00 % or less,
Mo: 0.50 % or less,
Cr: 1.00 % or less,
Zr: 0.100 % or less,
Ca: 0.0100 % or less,
Nb: 0.100 % or less,
V: 0.200 % or less,
W: 0.200 % or less,
Sb: 0.100 % or less,
Sn: 0.100 % or less, and
Mg: 0.0100 % or less.

Cu: 1.00 % or less

Cu is an element that improves corrosion resistance. Further, Cu has an effect of coating the steel sheet surface with corrosion products to suppress hydrogen entry to the steel sheet and improve delayed fracture resistance. In view of the above, Cu content is preferably more than 0 %. The Cu content is more preferably 0.01 % or more. In particular, from the viewpoint of improving delayed fracture resistance, the Cu content is even more preferably 0.05 % or more. However, the Cu content being too high may cause surface defects. Therefore, when Cu is included, the Cu content is preferably 1.00 % or less.

Ni: 1.00 % or less

Ni is another element that improves corrosion resistance. In view of the above, Ni content is preferably more than 0 %. The Ni content is more preferably 0.01 % or more. However, when the Ni content is too high, scale formation in the heating furnace becomes uneven, causing surface defects. Further, costs are increased. Therefore, when Ni is included, the Ni content is preferably 1.00 % or less.

Mo: 0.50 % or less

Mo can be included for the purpose of obtaining the effects of improving hardenability of steel and stably securing the defined strength. From the viewpoint of obtaining the above effects, Mo content is preferably more than 0 %. The Mo content is more preferably 0.001 % or more. The Mo content is even more preferably 0.005 % or more. However, the Mo content exceeding 0.50 % leads to degradation of chemical convertibility. Therefore, when Mo is included, the Mo content is preferably 0.50 % or less.

Cr: 1.00 % or less

Cr can be included for the purpose of obtaining the effect of improving hardenability of steel. From the viewpoint of obtaining the above effect, Cr content is preferably more than 0 %. The Cr content is more preferably 0.001 % or more. However, the Cr content exceeding 1.00 % leads to degradation of chemical convertibility. Therefore, when Cr is included, the Cr content is preferably 1.00 % or less. From the viewpoint of preventing degradation of chemical convertibility, the Cr content is more preferably 0.20% or less.

Zr: 0.100 % or less

Zr contributes to higher strength through the refinement of prior γ grain size and ensuing refinement of the internal structure of martensite. In view of the above, Zr content is preferably more than 0 %. The Zr content is more preferably 0.001 % or more. However, excessive Zr content increases coarse Zr precipitates, leading to degradation of delayed fracture resistance. Therefore, when Zr is included, the Zr content is preferably 0.100 % or less.

Ca: 0.0100 % or less

Ca has the effects of fixing S as CaS and improving delayed fracture resistance. From the viewpoint of obtaining such effects, Ca content is preferably more than 0 %. The Ca content is more preferably 0.0001 % or more. However, excessive Ca content degrades surface quality. Therefore, when Ca is included, the Ca content is preferably 0.0100 % or less. The Ca content is more preferably 0.0050 % or less.

Nb: 0.100 % or less

Nb contributes to higher strength through the refinement of prior γ grain size and ensuing refinement of the internal structure of martensite. In view of the above, Nb content is preferably more than 0 %. The Nb content is more preferably 0.002 % or more. However, excessive Nb content increases coarse Nb precipitates, leading to degradation of delayed fracture resistance. Therefore, when Nb is included, the Nb content is preferably 0.100 % or less.

V: 0.200 % or less

V can be included for the purpose of obtaining the effects of improving hardenability of steel and increasing strength through refinement of martensite. From the viewpoint of obtaining these effects, V content is preferably more than 0 %. The V content is more preferably 0.001 % or more. However, when the V content exceeds 0.200 %, castability degrades. Therefore, when V is included, the V content is preferably 0.200 % or less.

W: 0.200 % or less

W contributes to higher strength through the formation of fine W carbides and W carbonitrides. In view of the above, W content is preferably more than 0 %. The W content is more preferably 0.001 % or more. However, excessive W content increases coarse precipitates remaining in a non-solid solution state during slab heating in a hot rolling process, leading to degradation of delayed fracture resistance. Therefore, when W is included, the W content is preferably 0.200 % or less.

Sb: 0.100 % or less

Sb inhibits oxidation and nitridation of the surface layer of the steel sheet, thereby suppressing a decrease in C and B. The suppression of a decrease in C and B inhibits ferrite formation in the surface layer of the steel sheet and contributes to higher strength. In view of the above, Sb content is preferably more than 0 %. The Sb content is more preferably 0.001 % or more. However, when the Sb content exceeds 0.100 %, castability degrades. Further, Sb segregates at prior γ grain boundaries, leading to degradation of delayed fracture resistance. Therefore, when Sb is included, the Sb content is preferably 0.100 % or less.

Sn: 0.100 % or less

Sn inhibits oxidation and nitridation of the surface layer of the steel sheet, thereby suppressing a decrease in C and B. The suppression of a decrease in C and B inhibits ferrite formation in the surface layer of the steel sheet, contributes to higher strength, and improves delayed fracture resistance. In view of the above, Sn content is preferably more than 0 %. The Sn content is more preferably 0.001 % or more. However, when the Sn content exceeds 0.100 %, castability degrades. Further, Sn segregates at prior γ grain boundaries, leading to degradation of delayed fracture resistance. Therefore, when Sn is included, the Sn content is preferably 0.100 % or less.

Mg: 0.0100 % or less

Mg fixes O as MgO and improves delayed fracture resistance. In view of the above, Mg content is preferably more than 0 %. The Mg content is more preferably 0.0001 % or more. However, excessive Mg content leads to degradation of surface quality and delayed fracture resistance. Therefore, when Mg is included, the Mg content is preferably 0.0100 % or less.

Elements other than the above include, for example, Se, As, Pb, Bi, Zn, Cs, Rb, Co, La, Tl, Nd, Y, In, Be, Hf, Tc, Ta, O, La, Ce, Pr, and the like. The total content of one or more elements selected from this list is acceptable when 0.02 % or less. Of course, the content of any of these elements may be 0 %.

Elements other than those described above are Fe and inevitable impurity.

The following describes the microstructure of the steel sheet according to an embodiment of the present disclosure.

The microstructure of the steel sheet according to an embodiment of the present disclosure:

in area fractions relative to the entire microstructure,
martensite is more than 60 % and 90 % or less,
bainite is 10 % or more and 30 % or less,
retained austenite is less than 5 %, and

the balance is 5 % or less,

maximum size of carbides inside the martensite is 400 nm or less,

number density of island regions of the bainite is $120 \times 10^{-4}/\mu m^2$ or more, and

number of island regions of the bainite having an aspect ratio of 1.8 or more as a percentage of the total number of island regions of the bainite is 60 % or more.

The reasons for each of these limitations are described below.

Area fraction of martensite: more than 60 % and 90 % or less

In order to obtain the defined strength, the area fraction of martensite is more than 60 %. When the area fraction of martensite is 60 % or less, bainite, ferrite, retained y, and the like increase, making obtaining the defined strength difficult. Methods to secure the defined strength in a microstructure with an area fraction of martensite 60 % or less include, for example, lowering the tempering temperature or increasing the C content. However, in such cases, martensite becomes excessively hardened, resulting in degradation of delayed fracture resistance. Therefore, from the viewpoint of achieving both excellent delayed fracture resistance and the defined strength, the area fraction of martensite is more than 60 %. The area fraction of martensite is preferably 62 % or more. The area fraction of martensite is more preferably 65 % or more. On the other hand, when martensite exceeds 90 %, excellent ductility cannot be obtained. The area fraction of martensite is therefore 90 % or less. The area fraction of martensite is preferably 88 % or less. The area fraction of martensite is more preferably 85 % or less.

Area fraction of bainite: 10 % or more and 30 % or less

To achieve both the defined strength and excellent ductility, the area fraction of bainite is 10 % or more and 30 % or less. When the area fraction of bainite falls outside the range from 10 % or more to 30 % or less, achieving both the defined strength and excellent ductility is not possible. The area fraction of bainite is preferably 12 % or more. The area fraction of bainite is more preferably 15 % or more. Further, the area fraction of bainite is preferably 28 % or less. The area fraction of bainite is more preferably 25 % or less.

Area fraction of retained austenite: less than 5 %

Retained austenite contributes to ductility and therefore including a small amount is acceptable. However, as mentioned above, retained austenite may transform to hard martensite during press forming, contributing to delayed fracture. The area fraction of retained austenite is therefore less than 5 %. The area fraction of retained austenite is preferably 4 % or less. The area fraction of retained austenite is more preferably 3 % or less. In the steel sheet according to an embodiment of the present disclosure, ductility is secured by bainite, and therefore the area fraction of retained austenite may be 0 %.

Area fraction of residual microstructure: 5 % or less

Residual microstructure other than martensite, bainite, and retained austenite may decrease strength or contribute to delayed fracture. The area fraction of the residual microstructure is therefore 5 % or less. The area fraction of the residual microstructure is preferably 4 % or less. The area fraction of the residual microstructure is more preferably 3 % or less. The area fraction of the residual microstructure may be 0 %. Residual microstructure other than martensite, bainite, and retained austenite may include pearlite, for example.

Here, the area fractions of martensite and bainite are measured as follows.

An L-section of the steel sheet (vertical section parallel to the rolling direction) is polished, corroded with nital, then observed by scanning electron microscopy (SEM) at a 1/4 sheet thickness position of the steel sheet with 4 fields of view at 2000× magnification. Image interpretation of the micrograph taken is performed to identify martensite and bainite as follows.

• Martensite

Martensite is a region of gray contrast. Here, martensite consists mainly of so-called tempered martensite, in which tempering has occurred during the production process. Further, some martensite may contain so-called fresh martensite that has not undergone tempering, with an area fraction of 5 % or less (in each of the Examples described below, the area fraction of fresh martensite (with no internal carbides observed) was 5 % or less). Note that tempered martensite includes martensite that has self-tempered during continuous cooling. Both tempered martensite and fresh martensite are regions of gray contrast. However, tempered martensite typically contains internal white contrast carbides. On the other hand, no internal carbides are observed in fresh martensite. A region occupied by carbides inside tempered martensite is included as martensite area.

• Bainite

Bainite is a region of black contrast. Ferrite is also a region of black contrast. However, ferrite is equiaxed in morphology, while bainite is relatively plate-like. Accordingly, distinguishing between the two based on morphology is possible. However, distinguishing between the two can be difficult. In the microstructure formed by the chemical composition described above, the area fraction of ferrite is typically small, and specifically 10 % or less. Further, even when the area fraction of ferrite is large, the percentage of the number of island regions having an aspect ratio of 1.8 or more, as described below, is outside the defined range. Accordingly, here, all regions of black contrast are identified as bainite to measure the area fraction. The interior of bainite may contain martensite (fresh martensite) or pearlite. Here, pearlite is a layered microstructure consisting of ferrite and plate-like carbides. In this case, martensite and pearlite are treated as separate microstructure from bainite. That is, a region occupied by martensite and pearlite within bainite is not included in the area of bainite. Further, bainite may contain carbides, nitrides, sulfides, and oxides, but regions occupied by these are included in the area of bainite.

Further, martensite and bainite can basically be distinguished based on the contrast difference in the SEM micrograph described above. However, when distinguishing between the two is difficult, it is possible to do so by observing the position and variants of carbides contained inside by SEM at 10,000× magnification. That is, in bainite, carbides are formed at the interface of the lath-shape microstructure or within laths. Further, the crystal orientation relationship between bainitic ferrite and cementite is one type, and therefore the carbides formed extend in a single direction. On the other hand, in tempered martensite mainly composed of martensite, carbides are formed in laths. Further, there are two or more types of crystal orientation relationships between laths and carbides, and therefore the carbides formed extend in multiple directions. Accordingly, distinguishing tempered martensite from bainite by observing the position and variants of carbides contained inside is possible by SEM at 10,000× magnification.

For each of martensite and bainite, the total area of regions occupied as identified above is calculated for four fields of view, and the total for the four areas is divided by the total area of observed regions in the four fields of view and multiplied by 100 to obtain the area fraction. However, among regions of black contrast, island regions having an area of less than 1 $\mu m^2$ are excluded when calculating the area fraction of bainite.

Further, the area fraction of retained austenite is measured as follows.

The steel sheet is chemically polished with oxalic acid from the surface to a depth of 200 $\mu m$. Then, using the chemically polished surface as an observation plane, observation is performed by X-ray diffraction. MoK$\alpha$ radiation is used for incident X-rays to determine a ratio of diffraction intensity of the (200), (220), and (311) planes of fcc iron (austenite) to diffraction intensity of the (200), (211), and (220) planes of bcc iron. The volume fraction of retained austenite is then calculated from the ratio of the diffraction intensity of each plane. Then, assuming that the retained austenite is uniform in three dimensions, the volume fraction of the retained austenite is taken as the area fraction of retained austenite.

Further, the area fraction of the residual microstructure is determined by subtracting the area fractions of martensite, bainite, and retained austenite, determined as above, from 100 %.

[area fraction of residual microstructure (%)] = 100 - [area fraction of martensite (%)] - [area fraction of bainite (%)] - [area fraction of retained austenite (%)]

Maximum size of carbides inside martensite: 400 nm or less

In order to achieve the defined strength in a low Ceq chemical composition, it is important that fine carbides be inside martensite, in particular inside tempered martensite. The maximum size of carbides inside martensite (hereinafter also referred to as maximum size of carbides) is therefore 400 nm or less.

Prior γ grain boundaries, packet boundaries, and block boundaries are inherent in martensite regions, and carbides may precipitate film-like on these grain and other boundaries, but such carbides are not included as carbides present inside martensite.

Further, the maximum size of carbides inside martensite is the maximum length of individual carbides inside martensite in microstructure images as described above. Specifically, an L-section of the steel sheet (vertical section parallel to the rolling direction) is polished, corroded with nital, then observed by scanning electron microscopy (SEM) at a 1/4 sheet thickness position of the steel sheet with 4 fields of view at 15,000 × magnification. Then, using the same procedure for calculating area fractions, the maximum length of individual carbides inside martensite is determined by image interpretation of the micrographs taken. The carbides inside martensite are needle-like, and therefore the maximum length of individual carbides inside martensite effectively means the length of individual carbides in the longitudinal direction (the extension direction of carbides). Further, most carbides inside martensite are normally 50 nm or more in circle equivalent diameter, and therefore the maximum length of individual carbides inside martensite can be measured by extracting, for example, carbides observed in the micrographs that are 50 nm or more in circle equivalent diameter.

Number density of island regions of bainite: $120 \times 10^{-4}/\mu m^2$ or more

As mentioned above, the inventors have extensively studied correlation between the distribution state of bainite and delayed fracture resistance, and found that the number density of island regions of bainite (hereinafter also referred to as the number density of bainite) is important. Although the mechanism is not necessarily clear, the inventors believe that an increased number of interfaces between different phases disperses deformation or stress concentrations that contribute to fractures in delayed fracture. Here, the interfaces of different phases means boundaries between bainite and martensite. Here, when the number density of bainite was less than $120 \times 10^{-4}/\mu m^2$, delayed fracture resistance tended to degrade. Therefore, from the viewpoint of obtaining excellent delayed fracture resistance, the number density of bainite is $120 \times 10^{-4}/\mu m^2$ or more. The number density of bainite is preferably $150 \times 10^{-4}/\mu m^2$ or more. The number density of bainite is more preferably $200 \times 10^{-4}/\mu m^2$ or more. An upper limit of the number density of bainite is not particularly limited. For example, the number density of bainite is preferably $450 \times 10^{-4}/\mu m^2$ or less.

Number of island regions of bainite having aspect ratio of 1.8 or more as percentage of total number of island regions of bainite: 60 % or more

Bainite is softer than martensite, and therefore controlling the morphology of bainite is necessary from the viewpoint of securing the desired strength. Here, bainite consists of multiple island regions. Among these island regions, island regions having a large aspect ratio, in particular those having an aspect ratio of 1.8 or more, can be said to have a plate-like morphology. By increasing the number of such island regions having an aspect ratio of 1.8 or more, the microstructure is refined, and it becomes possible to obtain the desired strength while improving ductility, that is, the balance between strength and ductility can be improved. Therefore, the number of island regions of bainite having an aspect ratio of 1.8 or more as a percentage of the total number of island regions of bainite (hereinafter also referred to as the number ratio of bainite having an aspect ratio of 1.8 or more) is 60 % or more. The number ratio of bainite having an aspect ratio of 1.8 or more is preferably 65 % or more. The number ratio of bainite having an aspect ratio of 1.8 or more is more preferably 70 % or more. An upper limit of the number ratio of bainite having an aspect ratio of 1.8 or more is not particularly limited and may be 100 %.

Individual island regions are separated from other bainite island regions by microstructure other than bainite. That is, individual island regions are in contact with a phase other than bainite around an entire circumference. Further, specific shape of each island region is not particularly limited, and may be any of circular, elliptical, polygonal, ameboid (a shape extending in a plurality of irregular directions), and the like.

Here, the number density of bainite and the number ratio of bainite having an aspect ratio of 1.8 or more are measured using the micrographs of four fields of view used to calculate the area fractions of martensite and bainite described above, for example, as follows.

That is, the micrographs described above are subject to image analysis by ImageJ and binarized into bainite and other microstructures. Here, island regions having an area of less than 1 $\mu m^2$ are excluded from the calculation. Then, the aspect ratio of each island region is calculated by the particle analysis function of ImageJ. The number of island regions of bainite observed and the number of island regions having an aspect ratio of 1.8 or more are then counted, and the number ratio of bainite having an aspect ratio of 1.8 or more and the number density of bainite are calculated.

As mentioned above, martensite and carbides may be present inside individual island regions of bainite. In such a case, an island region where martensite or carbides are present inside the island region is counted as one island region, and the aspect ratio of the island region is calculated. Further, a threshold for binarization in bainite and other microstructures is determined, for example, as follows. ImageJ's binarization function expresses a luminance value of each pixel as a number from 0 to 255 and draws a frequency distribution. In this case, comparing the distribution of luminance values for bainite and other microstructures, the two distributions of local maximum value are distinctly different. The local minimum value located between the two local maximum value is set as the threshold. By setting the threshold in this way, the interface between bainite and martensite can be clearly separated.

Mechanical properties of the steel sheet according to an embodiment of the present disclosure are described below.

Tensile strength (TS): 1470 MPa or more

The steel sheet according to an embodiment of the present has excellent delayed fracture resistance and formability even at a TS of 1470 MPa or more. Accordingly, TS is 1470 MPa or more. An upper limit of TS is not particularly limited. For example, TS of 2500 MPa or less may be suitable. TS is measured by a tensile test in accordance with Japanese Industrial Standard JIS Z 2241. Details are described in the EXAMPLES section below.

Uniform elongation: 5.5 % or more

Total elongation is often used as an index of ductility, but total elongation also includes local elongation. Steel sheets are not processed in such a way that necking occurs when actually forming automotive parts, and therefore uniform elongation is more important as an index of press formability. In particular, a uniform elongation of 5.5 % or more enables application to a wide variety of automotive parts. The uniform elongation is therefore 5.5 % or more. An upper limit of the uniform elongation is not particularly limited. For example, uniform elongation of 12.0 % or less may be suitable. Uniform elongation is measured by a tensile test in accordance with Japanese Industrial Standard JIS Z 2241. Details are described in the EXAMPLES section below.

Excellent formability is defined as uniform elongation of 5.5% or more. Further, excellent delayed fracture resistance means that the material satisfies the acceptance criteria in the delayed fracture test according to the EXAMPLES section, as described below.

Further, the steel sheet according to an embodiment of the present disclosure may have a coated or plated layer on a surface (one or both sides). The type of coated or plated layer is not particularly limited and may be, for example, a galvanized layer or a coating or plating layer of a metal other than zinc. Further, the coated or plated layer may contain components other than a main component such as zinc. Examples of galvanized layers include hot-dip galvanized layers, galvannealed layers, and electrogalvanized layers.

The thickness of the steel sheet according to an embodiment of the present disclosure is not particularly limited. The thickness of the steel sheet is preferably 0.5 mm or more. The thickness of the steel sheet is preferably 3.0 mm or less.

[2] Member

A member according to an embodiment of the present disclosure is described below.

The member according to an embodiment of the present disclosure is a member made using the steel sheet described above as a material. For example, the steel sheet as a material is subjected to at least one of forming or joining, or, suitably, cold pressing, to make the member.

Here, the steel sheet simultaneously achieves a TS of 1470 MPa or more, excellent formability, and excellent delayed fracture resistance. Further, due to the above properties, the steel sheet is applicable to various components by cold pressing, thereby contributing to increased component strength and weight reduction more advantageously in terms of cost and productivity. Therefore, the member according to an embodiment of the present disclosure is particularly suitable for application as a member for use in automobiles, home appliances, and the like.

[3] Method of producing steel sheet

The following describes a method of producing a steel sheet according to an embodiment of the present disclosure.

The method of producing a steel sheet according to an embodiment of the present disclosure includes:

a hot rolling process of hot rolling a steel slab having the chemical composition described above to produce a hot-rolled steel sheet;
a cold rolling process of cold rolling the hot-rolled steel sheet to produce a cold-rolled steel sheet;
an annealing process of heating the cold-rolled steel sheet at an average heating rate of 3.5 °C/s or more in a temperature range from 50 °C to an annealing temperature, then annealing at the annealing temperature of $A_3$ temperature to $A_3$ temperature + 40 °C for an annealing time of 30 s or more;
a first cooling process of cooling the cold-rolled steel sheet at an average cooling rate of 10 °C/s or more in a temperature range from the annealing temperature to 650 °C;
a holding process of holding the cold-rolled steel sheet in a temperature range from 500 °C to 650 °C for 10 s or more to 200 s or less;
a second cooling process of cooling the cold-rolled steel sheet at an average cooling rate of 70 °C/s or more in a temperature range from 500 °C to 50 °C to a cooling stop temperature of 50 °C or less; and
a tempering process of tempering the cold-rolled steel sheet at a tempering temperature of 150 °C to 250 °C for a tempering time of 30 s or more.

Unless otherwise specified, each temperature above refers to a surface temperature of the steel slab or the steel sheet.

[Hot rolling process]

First, the steel slab is hot rolled to obtain a hot-rolled steel sheet. Methods of preparing a steel slab (production conditions) and hot rolling conditions are not particularly limited and may be carried out in accordance with conventional methods. Pickling may be optionally applied to a hot-rolled steel sheet after the hot rolling process. Pickling conditions are also not particularly limited, and a conventional method may be followed.

[Cold rolling process]

The hot-rolled steel sheet is then cold rolled to obtain a cold-rolled steel sheet. Cold rolling conditions are not particularly limited, and a conventional method may be followed. Pickling may be optionally applied to a cold-rolled steel sheet after the cold rolling process. Pickling conditions are also not particularly limited, and a conventional method may be followed.

[Annealing process]

The cold-rolled steel sheet obtained as described above is then heated at an average heating rate of 3.5 °C/s or more in a temperature range from 50 °C to an annealing temperature, then annealed at the annealing temperature of $A_3$ temperature to ($A_3$ temperature + 40 °C) for an annealing time of 30 s or more.

Average heating rate in temperature range from 50 °C to annealing temperature: 3.5 °C/s or more

In order to achieve the bainite morphology and distribution state described above in the microstructure of the final product steel sheet, it is important to have a high average heating rate in the temperature range from 50 °C to the annealing temperature (hereinafter also referred to as heating rate). Using a high heating rate increases the frequency of austenite grain nucleation and allows for finer austenite grain size. As a result, bainite transformation is promoted using grain boundaries as nucleation sites, and the number density of bainite increases. The average heating rate is preferably 3.8 °C/s or more. The average heating rate is more preferably 4.0 °C/s or more. An upper limit of the heating rate is not particularly limited. For example, the heating rate is preferably 100 °C/s or less.

Annealing temperature: $A_3$ temperature to $A_3$ temperature + 40 °C

In order to achieve the bainite morphology and distribution state described above in the microstructure of the final product steel sheet, it is important to keep the annealing temperature relatively low in the austenite single phase region, specifically from the $A_3$ temperature to the $A_3$ temperature + 40 °C.
That is, by keeping the annealing temperature relatively low in the austenite single phase region, prior austenite grain size can be made finer. This promotes bainite transformation with grain boundaries as nucleation sites and increases the number density of bainite. Further, carbides formed during hot rolling do not dissolve during annealing but remain intact and act as nucleation sites for bainite transformation. This increases the number density of bainite. As a result, excellent delayed fracture resistance is obtainable. The annealing temperature is therefore the $A_3$ temperature + 40 °C or less. When the annealing temperature exceeds the $A_3$ temperature + 40 °C, the defined number density of bainite cannot be obtained and excellent delayed fracture resistance cannot be obtained.
Further, the annealing temperature is the $A_3$ temperature or more in order to produce a defined amount of martensite to obtain the TS of 1470 MPa or more. When the annealing temperature is less than the $A_3$ temperature, sufficient austenite is not formed during annealing, and the defined amount of martensite and therefore the TS of 1470 MPa or more cannot be obtained in the final product.
The annealing temperature is the maximum arrival temperature in the annealing process, and the temperature during holding during annealing may be constant or variable as long as the temperature is in the temperature range from the $A_3$ temperature to the $A_3$ temperature + 40 °C. Further, the $A_3$ temperature is determined by the following expression.

$A_3$ temperature (°C) = 910 - 203 × $[C\%]^{0.5}$ + 44.7 × [Si%] + 31.5 × --> [Mo%] - 30 × [Mn%] - 11 × [Cr%] + 700 × [P%] + 400 × [Al%] + 400 × [Ti%]

Annealing time: 30 s or more

In order to produce the defined amount of martensite and obtain the TS of 1470 MPa or more, the annealing time is 30 s or longer. When the annealing time is less than 30 s, sufficient austenite is not formed during annealing, and the defined amount of martensite and therefore the TS of 1470 MPa or more cannot be obtained in the final product. The annealing time is preferably 60 s or more. The annealing time is more preferably 90 s or more. An upper limit of the annealing time is not particularly limited, but when the annealing time exceeds a certain level, production costs may increase. The annealing time is therefore preferably 900 s or less.

The annealing time is the holding time (residence time) in the temperature range from the $A_3$ temperature to the $A_3$ temperature + 40 °C.

[First cooling process]

The cold-rolled steel sheet annealed as described above is then cooled at an average cooling rate of 10 °C/s or more in a temperature range from the annealing temperature to 650 °C.

Average cooling rate in temperature range from annealing temperature to 650 °C: 10 °C/s or more

To decrease ferrite formation and avoid loss of strength, the average cooling rate in the temperature range from the annealing temperature to 650 °C (hereinafter also referred to as the first cooling rate) needs to be high, and specifically needs to be 10 °C/s or more. When the first cooling rate is less than 10 °C/s, excessive ferrite is formed, leading to decreased strength. The first cooling rate is therefore 10 °C/s or more. The first cooling rate is preferably 15 °C/s or more. The first cooling rate is more preferably 20 °C/s or more. An upper limit of the first cooling rate is not particularly limited. The first cooling rate is preferably 100 °C/s or less.

[Holding process]

The cold-rolled steel sheet is then held in a temperature range from 650 °C to 500 °C for 10 s or more to 200 s or less.

Holding time in temperature range from 650 °C to 500 °C: 10 s or more to 200 s or less

In order to secure the defined amount of bainite and to achieve the bainite morphology and distribution state as described above, it is important that the holding (residence) time (hereinafter also referred to simply as holding time) in the temperature range from 650 °C to 500 °C be 10 s or more to 200 s or less. By controlling the holding time to be in the range from 10 s or more to 200 s or less, it is possible to produce a defined amount of bainite and achieve the morphology and distribution state of bainite as described above. Here, when the holding time is less than 10 s, the defined amount of bainite cannot be produced. On the other hand, when the holding time exceeds 200 s, the defined number density of bainite cannot be obtained. Further, production costs increase. Accordingly, the holding time is 10 s or more to 200 s or less. The holding time is preferably 15 s or more. The holding time is more preferably 20 s or more. Further, the holding time is preferably 180 s or less. The holding time is more preferably 160 s or less.

The reason for specifying the holding time in the temperature range from 650 °C to 500 °C is as follows. Ferrite is easily formed when holding at temperatures higher than this range. On the other hand, at temperatures lower than this range, longer holding times are required to obtain the defined area fraction of bainite. In other words, holding in this temperature range is suitable for achieving the bainite morphology and distribution state described above, while holding outside this temperature range makes it difficult to achieve the bainite morphology and distribution state described above. Further, the temperature during holding may be constant or variable, as long as the temperature is in the temperature range from 650 °C to 500 °C.

[Second cooling process]

The cold-rolled steel sheet is then cooled at an average cooling rate of 70 °C/s or more in a temperature range from 500 °C to 50 °C to a cooling stop temperature of 50 °C or less.

Average cooling rate in temperature range from 500 °C to 50 °C: 70 °C/s or more

As mentioned above, in a chemical composition having low equivalent carbon content Ceq, the cooling rate in the temperature range from 500 °C to 50 °C after the above holding process needs to be increased to suppress coarsening of carbides present inside martensite. Specifically, the average cooling rate in the temperature range (hereinafter also referred to as the second cooling rate) needs to be 70 °C/s or more. When the second cooling rate is less than 70 °C/s, self-tempering becomes pronounced, carbides become coarse, and the defined strength cannot be obtained. The second cooling rate is therefore 70 °C/s or more. The second cooling rate is preferably 100 °C/s or more. The second cooling rate is more preferably 150 °C/s or more. An upper limit of the second cooling rate is not particularly limited. The second cooling rate is preferably 2000 °C/s or less.

Cooling stop temperature: 50 °C or less

The second cooling rate is controlled as described above, and the cooling stop temperature is 50 °C or less for a chemical composition having low equivalent carbon content Ceq, from the viewpoint of suppressing coarsening of carbides contained inside martensite. A lower limit of the cooling stop temperature is not particularly limited. The cooling stop temperature is preferably 5 °C or more.

[Tempering process]

The cold-rolled steel sheet is then tempered at a tempering temperature of 150 °C to 250 °C for a tempering time of 30 s or more.

Tempering temperature: 150 °C to 250 °C

In order to moderately soften hard martensite and improve delayed fracture resistance, after the second cooling process described above, tempering treatment needs to be applied, in which reheating then holding in the temperature range from 150 °C to 250 °C for 20 s or more are performed. Here, when the tempering temperature is less than 150 °C, martensite remains hard and delayed fracture is promoted. On the other hand, when the tempering temperature exceeds 250 °C, carbides inside martensite become coarse and the defined strength cannot be obtained. The tempering temperature is therefore 150 °C to 250 °C. The tempering temperature is the maximum arrival temperature in the tempering process, and the temperature during holding in tempering may be constant or variable as long as the temperature is in the temperature range from 150 °C to 250 °C.

Tempering time: 30 s or more

When the tempering time is less than 30 s, martensite remains hard and delayed fracture is promoted. The tempering time is therefore 30 s or more. Tempering time is preferably 120 s or more. Tempering time is more preferably 300 s or more. An upper limit of the tempering time is not particularly limited. From the viewpoint of avoiding an increase in production costs, the tempering time is preferably 1500 s or less.
The tempering time is the holding time (residence time) in the temperature range from 150 °C to 250 °C.
From the viewpoint of stabilizing shape accuracy of press forming, such as adjustment of roughness on the sheet surface and flattening of the sheet shape, the steel sheet may optionally be subjected to skin pass rolling (temper rolling) or leveling. The conditions of skin pass rolling and leveling process are not particularly limited and may follow a conventional method.

[Coating or plating treatment process]

Further, the resulting steel sheet may be subjected to coating or plating treatment. Through the coating or plating treatment, the steel sheet may be provided with a coated or plated layer on a surface. Coating or plating treatment methods are not particularly limited and include, for example, hot dip coating and electroplating. Further, the coating or plating treatment may include an alloying process after hot dip coating. Further, the type of coating or plating is not particularly limited and includes, for example, zinc coating or plating or coating or plating of a metal other than zinc. The conditions of the coating or plating treatment are not particularly limited and may follow a conventional method. A coating or plating bath may contain components other than a main component such as zinc. Further, when both coating or plating treatment and skin pass rolling are performed, the skin pass rolling is preferably performed after the coating or plating treatment.
Each of the above processes after the annealing process may optionally be performed by continuous annealing or batch annealing. From the viewpoint of productivity, continuous annealing is preferred.
Conditions other than those described above are not particularly limited, and a conventional method may be used.

[4] Method of producing member

The following describes a method of producing a member according to an embodiment of the present disclosure.
The method of producing a member according to an embodiment of the present disclosure includes applying at least one of forming or joining, or, suitably, cold pressing, to the steel sheet (for example, a steel sheet produced by the method of producing a steel sheet) to produce the member.

Here, a forming method is not particularly limited, and a typical processing method such as press working may be used, for example. Further, a joining method is also not particularly limited, and for example, typical welding such as spot welding, laser welding, arc welding, and the like, rivet joining, swaging joining, and the like may be used. Forming and joining conditions are not particularly limited and may follow a conventional method. Cold pressing conditions are also not particularly limited, and may follow a conventional method.

EXAMPLES

Steel having the chemical compositions listed in Table 1 (the balance being Fe and inevitable impurity) was melted and cast into steel slabs. The obtained steel slabs were hot rolled to obtain hot-rolled steel sheets under a set of conditions including: rolling finish temperature: 840 °C to 950 °C and coiling temperature: 400 °C to 700 °C. The obtained hot-rolled steel sheets were then subjected to pickling and subsequent cold rolling to obtain cold-rolled steel sheets. The obtained cold-rolled steel sheets were subjected to heat treatment by continuous annealing (annealing process, first cooling process, holding process, second cooling process, and tempering process) under sets of conditions listed in Table 2. The holding temperatures listed in Table 2 were the average holding temperatures in the temperature range from 650 °C to 500 °C in the holding process, and were obtained by dividing the time-integrated value of the holding temperature in the temperature range by the holding time (residence time) in that temperature range. Note that No. 31 is an example of a high holding temperature in the holding process, and the holding temperature and holding time listed in Table 2 are the average holding temperature and holding time, respectively, from when the temperature fell below 750 °C until the start of the second cooling process. Further, No. 32 is an example of a low holding temperature in the holding process, and the holding temperature and holding time listed in Table 2 are the average holding temperature and holding time, respectively, from when the temperature fell below 650 °C until the start of the second cooling process. For both No. 31 and No. 32, the holding time in the temperature range from 650 °C to 500 °C was outside the range of 10 s to 200 s. Further, the cooling stop temperature in the second cooling process was room temperature (25 °C) in each case. Coating or plating treatment was applied to at least one cold-rolled steel sheet to provide a coated or plated layer on a surface of the steel sheet. The cold-rolled steel sheet or coated or plated steel sheet was then subjected to 0.1 % temper rolling to obtain a steel sheet (thickness: 1.0 mm to 1.8 mm) as the final product. The annealing time of No. 27 was the holding time at the annealing temperature of No. 27. Further, conditions other than those specified were in accordance with a conventional method.

The obtained steel sheets were used to identify the microstructure of the steel sheets, and the maximum size of carbides inside martensite, the number density of bainite, and the number ratio of bainite having an aspect ratio of 1.8 or more were measured according to the procedures described above. Results are listed in Table 3. The maximum size of carbides inside martensite was measured using the same sample used in the identification of the steel sheet microstructure and four fields of view checked by SEM at 15,000× magnification. When no carbide having a maximum length exceeding 400 nm was observed inside martensite, the column "Maximum carbide size 400 nm or less" in Table 3 is marked "Satisfactory"; and when such a carbide was observed, the column is marked "Unsatisfactory".

Further, tensile tests and delayed fracture tests were conducted according to the following procedures.

Tensile testing was performed in accordance with JIS Z 2241. That is, a JIS No. 5 test piece was taken from each steel sheet such that the longitudinal direction was perpendicular to the rolling direction of the steel sheet. The collected test piece was subjected to tensile testing at a crosshead velocity of 10 mm/min to measure TS and uniform elongation. The results are listed in Table 3. The evaluation criteria were as follows.

- TS

    Pass: 1470 MPa or more
    Fail: less than 1470 MPa

- Uniform elongation

    Pass: 5.5 % or more
    Fail: less than 5.5 %

The delayed fracture testing was performed as follows. That is, test pieces each having a short side of 16 mm and a long side of 70 mm were cut from the steel sheet by shearing so that the longitudinal direction was perpendicular to the rolling direction of the steel sheet. Shearing was performed under conditions where the angle between the upper and lower blades was 0.5° and the gap (clearance) between the upper and lower blades was 10 % of the thickness of the steel sheet. Further, the end faces of the long side of the test pieces were left sheared. The resulting test pieces were immersed in an immersion solution with various stresses (500 MPa to 1000 MPa, 100 MPa pitch) applied by 4-point bending. The immersion solution was a mixture of 0.1 mass% ammonium thiocyanate solution and McIlvaine buffer at a volume ratio of 1:1, with the pH adjusted to 7.0. The solution was prepared to have a pH of 7.0, depending on the ratio of citric acid and disodium hydrogen phosphate used in the preparation of the McIlvaine buffer (see T. C. McIlvaine, Journal of Biological Chemistry, Volume 49, Issue 1, p. 183-186). After 96 h of immersion, the test pieces were removed and visually checked for cracks. Among test pieces that did not crack, those with a maximum applied stress of 700 MPa or more were judged to "Pass" (excellent delayed fracture resistance), and those with a maximum applied stress of less than 700 MPa were judged to "Fail" (insufficient delayed fracture resistance). The results are listed in Table 3.

[Table 1]

Table 1

| Steel ID | Chemical composition (mass%) | | | | | | | | | | Ceq | A$_3$ temp. (°C) | Remarks |
|---|---|---|---|---|---|---|---|---|---|---|---|---|---|
| | C | Si | Mn | P | S | sol.Al | N | Ti | B | Other | | | |
| A | 0.21 | 0.6 | 1.8 | 0.004 | 0.0023 | 0.03 | 0.004 | 0.042 | 0.0028 | | 0.54 | 821 | Conforming steel |
| B | 0.34 | 0.6 | 1.9 | 0.008 | 0.0007 | 0.02 | 0.004 | 0.019 | 0.0019 | | 0.68 | 783 | Conforming steel |
| C | 0.31 | 1.0 | 1.7 | 0.010 | 0.0027 | 0.03 | 0.003 | 0.007 | 0.0017 | | 0.64 | 812 | Conforming steel |
| D | 0.28 | 0.4 | 1.6 | 0.022 | 0.0018 | 0.02 | 0.004 | 0.021 | 0.0017 | | 0.56 | 804 | Conforming steel |
| E | 0.26 | 0.5 | 2.4 | 0.015 | 0.0014 | 0.02 | 0.003 | 0.004 | 0.0035 | | 0.68 | 777 | Conforming steel |
| F | 0.24 | 0.5 | 2.1 | 0.042 | 0.0017 | 0.02 | 0.004 | 0.036 | 0.0032 | | 0.61 | 822 | Conforming steel |
| G | 0.26 | 0.6 | 1.8 | 0.004 | 0.0041 | 0.02 | 0.003 | 0.039 | 0.0037 | Ca:0.0036 | 0.59 | 806 | Conforming steel |
| H | 0.31 | 0.5 | 1.8 | 0.019 | 0.0020 | 0.08 | 0.004 | 0.031 | 0.0030 | | 0.63 | 823 | Conforming steel |
| I | 0.25 | 0.5 | 2.0 | 0.007 | 0.0018 | 0.02 | 0.008 | 0.032 | 0.0038 | | 0.60 | 797 | Conforming steel |
| J | 0.26 | 0.7 | 1.8 | 0.007 | 0.0025 | 0.02 | 0.002 | 0.068 | 0.0040 | | 0.59 | 824 | Conforming steel |
| K | 0.30 | 0.6 | 1.8 | 0.017 | 0.0020 | 0.02 | 0.002 | 0.019 | 0.0045 | | 0.63 | 799 | Conforming steel |
| L | 0.29 | 0.7 | 2.1 | 0.001 | 0.0012 | 0.03 | 0.004 | 0.024 | 0.0024 | Ca:0.0001, Cu:0.12 | 0.67 | 791 | Conforming steel |
| M | 0.24 | 0.6 | 2.3 | 0.018 | 0.0015 | 0.04 | 0.002 | 0.028 | 0.0004 | Mo:0.08, Nb:0.014, Cu:0.16 | 0.65 | 811 | Conforming steel |
| N | 0.31 | 0.8 | 1.8 | 0.013 | 0.0015 | 0.03 | 0.005 | 0.038 | 0.0022 | V:0.007, W:0.004, Sb:0.006 | 0.64 | 815 | Conforming steel |
| O | 0.28 | 0.8 | 1.7 | 0.006 | 0.0016 | 0.02 | 0.005 | 0.024 | 0.0031 | Cr:0.07, Sn:0.005, Mg:0.0005 | 0.60 | 808 | Conforming steel |
| P | 0.29 | 0.4 | 1.7 | 0.007 | 0.0028 | 0.03 | 0.003 | 0.021 | 0.0013 | Cu:0.14, Co:0.0015, Sn:0.004 | 0.59 | 793 | Conforming steel |
| Q | 0.27 | 0.5 | 2.0 | 0.024 | 0.0014 | 0.03 | 0.004 | 0.034 | 0.0029 | Ni:0.08, Mo:0.05, V:0.010, Zr:0.006 | 0.62 | 811 | Conforming steel |
| R | **0.36** | 0.4 | 2.0 | 0.020 | 0.0012 | 0.03 | 0.005 | 0.038 | 0.0021 | | **0.71** | 797 | Comparative steel |
| s | **0.19** | 0.7 | 1.8 | 0.021 | 0.0016 | 0.02 | 0.002 | 0.020 | 0.0019 | | 0.52 | 830 | Comparative steel |
| T | 0.32 | 0.8 | **1.5** | 0.012 | 0.0026 | 0.03 | 0.003 | 0.047 | 0.0031 | | 0.60 | 825 | Comparative steel |
| U | 0.30 | 0.6 | **2.6** | 0.023 | 0.0019 | 0.03 | 0.003 | 0.032 | 0.0037 | | **0.76** | 789 | Comparative steel |
| V | 0.26 | 0.4 | 2.0 | **0.058** | 0.0020 | 0.03 | 0.004 | 0.027 | 0.0009 | | 0.61 | 828 | Comparative steel |
| W | 0.28 | 0.7 | 1.9 | 0.016 | **0.0055** | 0.02 | 0.003 | 0.031 | 0.0034 | | 0.63 | 808 | Comparative steel |

EP 4 477 770 A1

(continued)

| Steel ID | Chemical composition (mass%) | | | | | | | | | | Ceq | A$_3$ temp. (°C) | Remarks |
|---|---|---|---|---|---|---|---|---|---|---|---|---|---|
| | C | Si | Mn | P | S | sol.Al | N | Ti | B | Other | | | |
| X | 0.29 | 0.7 | 1.7 | 0.011 | 0.0030 | **0.11** | 0.005 | 0.035 | 0.0046 | | 0.59 | 849 | Comparative steel |
| Y | 0.27 | 0.7 | 2.0 | 0.019 | 0.0021 | 0.01 | **0.012** | 0.036 | 0.0015 | | 0.63 | 808 | Comparative steel |
| Z | 0.27 | 0.4 | 1.9 | 0.017 | 0.0006 | 0.02 | 0.003 | **0.085** | 0.0008 | | 0.60 | 819 | Comparative steel |
| AA | 0.26 | 0.7 | 2.1 | 0.008 | 0.0012 | 0.03 | 0.004 | 0.025 | 0.0025 | As:0.002, Co:0.002, O:0.0014 | 0.64 | 802 | Conforming steel |
| AB | 0.27 | 0.6 | 1.9 | 0.009 | 0.0014 | 0.03 | 0.004 | 0.028 | 0.0029 | Pb:0.002, Zn:0.002 | 0.61 | 804 | Conforming steel |

* Underlined values do not satisfy a range or condition specified in the present disclosure.

[Table 2]

Table 2

| No. | Steel ID | Annealing | | | First cooling | Holding | | Second cooling | Tempering | | Coating or plating treatment | Remarks |
|---|---|---|---|---|---|---|---|---|---|---|---|---|
| | | Heating rate (°C/s) | Annealing temp. (°C) | Annealing time (s) | First cooling rate (°C/s) | Holding temp. (°C) | Holding time (s) | Second cooling rate (°C/s) | Tempering temp. (°C) | Tempering time (s) | | |
| 1 | A | 4.6 | 828 | 180 | 24 | 551 | 22 | 512 | 155 | 1146 | No | Example |
| 2 | B | 4.6 | 790 | 263 | 22 | 512 | 54 | 609 | 203 | 546 | No | Example |
| 3 | C | 4.0 | 836 | 507 | 30 | 601 | 23 | 171 | 230 | 784 | No | Example |
| 4 | D | 3.9 | 825 | 314 | 22 | 569 | 20 | 719 | 168 | 1027 | No | Example |
| 5 | E | 4.1 | 782 | 91 | 18 | 583 | 168 | 438 | 162 | 82 | No | Example |
| 6 | F | 4.4 | 845 | 432 | 35 | 585 | 36 | 338 | 171 | 733 | No | Example |
| 7 | G | 4.2 | 839 | 82 | 33 | 620 | 18 | 681 | 201 | 712 | No | Example |
| 8 | H | 4.0 | 838 | 337 | 13 | 530 | 29 | 526 | 227 | 283 | No | Example |
| 9 | I | 4.0 | 814 | 205 | 12 | 555 | 28 | 622 | 223 | 240 | No | Example |
| 10 | J | 4.4 | 830 | 365 | 20 | 555 | 26 | 618 | 210 | 802 | No | Example |
| 11 | K | 3.9 | 828 | 297 | 19 | 561 | 30 | 493 | 216 | 1069 | No | Example |
| 12 | L | 3.5 | 804 | 448 | 20 | 609 | 64 | 198 | 167 | 66 | No | Example |
| 13 | M | 4.3 | 849 | 174 | 23 | 551 | 42 | 398 | 198 | 972 | No | Example |
| 14 | N | 4.3 | 841 | 124 | 28 | 508 | 38 | 476 | 198 | 714 | No | Example |
| 15 | O | 3.8 | 820 | 329 | 19 | 501 | 38 | 579 | 174 | 513 | No | Example |
| 16 | P | 4.2 | 822 | 347 | 26 | 601 | 20 | 207 | 162 | 209 | Yes | Example |
| 17 | Q | 3.9 | 827 | 109 | 18 | 521 | 31 | 429 | 189 | 1092 | Yes | Example |
| 18 | **R** | 4.3 | 819 | 343 | 30 | 591 | 38 | 430 | 163 | 518 | No | Comparative Example |
| 19 | **S** | 4.5 | 856 | 52 | 24 | 559 | 22 | 615 | 162 | 877 | No | Comparative Example |
| 20 | **T** | 3.8 | 860 | 319 | 25 | 560 | 33 | 282 | 167 | 119 | No | Comparative Example |
| 21 | **U** | 3.8 | 803 | 281 | 15 | 559 | 182 | 704 | 192 | 779 | No | Comparative Example |

(continued)

| No. | Steel ID | Annealing | | | First cooling | Holding | | Second cooling | Tempering | | Coating or plating treatment | Remarks |
|---|---|---|---|---|---|---|---|---|---|---|---|---|
| | | Heating rate (°C/s) | Annealing temp. (°C) | Annealing time (s) | First cooling rate (°C/s) | Holding temp. (°C) | Holding time (s) | Second cooling rate (°C/s) | Tempering temp. (°C) | Tempering time (s) | | |
| 22 | **V** | 4.4 | 857 | 445 | 17 | 515 | 32 | 532 | 194 | 488 | No | Comparative Example |
| 23 | **W** | 4.4 | 830 | 223 | 33 | 613 | 34 | 741 | 212 | 616 | No | Comparative Example |
| 24 | **X** | 3.9 | 857 | 183 | 34 | 530 | 28 | 173 | 205 | 329 | No | Comparative Example |
| 25 | **Y** | 4.1 | 822 | 177 | 23 | 601 | 38 | 439 | 183 | 1049 | No | Comparative Example |
| 26 | **Z** | 4.4 | 824 | 432 | 14 | 571 | 39 | 399 | 168 | 571 | No | Comparative Example |
| 27 | A | 3.9 | **810** | 119 | 18 | 520 | 21 | 784 | 230 | 99 | No | Comparative Example |
| 28 | A | 3.8 | 846 | **23** | 15 | 505 | 34 | 347 | 217 | 259 | No | Comparative Example |
| 29 | A | 4.0 | **883** | 135 | 23 | 521 | 26 | 549 | 152 | 751 | No | Comparative Example |
| 30 | D | 3.6 | 831 | 599 | **2** | 576 | 22 | 192 | 223 | 309 | No | Comparative Example |
| 31 | D | 3.8 | 840 | 128 | 20 | **682** | 24 | 298 | 192 | 933 | No | Comparative Example |
| 32 | D | 4.4 | 814 | 543 | 20 | **475** | **212** | 374 | 211 | 231 | No | Comparative Example |
| 33 | D | 4.3 | 814 | 557 | 16 | 552 | **8** | 518 | 203 | 1065 | No | Comparative Example |
| 34 | D | 3.6 | 822 | 571 | 35 | 613 | **218** | 257 | 212 | 795 | No | Comparative Example |
| 35 | G | 4.0 | 840 | 145 | 19 | 501 | 30 | **54** | 226 | 231 | No | Comparative Example |
| 36 | G | 3.9 | 815 | 105 | 31 | 524 | 33 | 783 | **258** | 618 | No | Comparative Example |
| 37 | AA | 4.2 | 823 | 283 | 28 | 561 | 38 | 524 | 189 | 566 | No | Example |
| 38 | AB | 3.7 | 826 | 262 | 25 | 581 | 28 | 520 | 191 | 586 | No | Example |
| 39 | H | **3.2** | 839 | 328 | 12 | 528 | 28 | 524 | 225 | 286 | No | Comparative Example |

\* Underlined values do not satisfy a range or condition specified in the present disclosure.

[Table 3]

[Table 3]

Table 3

| No. | Steel ID | Area fraction of each phase | | | | Maximum carbide size 400 nm or less | Number density of bainite ($\times 10^{-4}$ /$\mu$m$^3$) | Number ratio of bainite having aspect ratio of 1.8 or more (%) | Tensile properties | | Delayed fracture resistance | Remarks |
|---|---|---|---|---|---|---|---|---|---|---|---|---|
| | | Martensite (%) | Bainite (%) | Retained $\gamma$ (%) | Residual microstructure (%) | | | | Tensile strength (MPa) | Uniform elongation (%) | | |
| 1 | A | 88 | 10 | 2 | 0 | Satisfactory | 171 | 70 | 1474 | 6.1 | Pass | Example |
| 2 | B | 64 | 29 | 3 | 3 | Satisfactory | 408 | 69 | 1607 | 6.3 | Pass | Example |
| 3 | C | 66 | 27 | 3 | 3 | Satisfactory | 348 | 75 | 1558 | 6.5 | Pass | Example |
| 4 | D | 76 | 20 | 3 | 2 | Satisfactory | 302 | 72 | 1520 | 6.3 | Pass | Example |
| 5 | E | 67 | 27 | 3 | 3 | Satisfactory | 398 | 66 | 1514 | 6.7 | Pass | Example |
| 6 | F | 85 | 14 | 2 | 0 | Satisfactory | 210 | 78 | 1514 | 6.0 | Pass | Example |
| 7 | G | 81 | 17 | 2 | 0 | Satisfactory | 252 | 77 | 1519 | 6.1 | Pass | Example |
| 8 | H | 83 | 15 | 2 | 0 | Satisfactory | 232 | 76 | 1618 | 5.5 | Pass | Example |
| 9 | I | 88 | 10 | 2 | 0 | Satisfactory | 193 | 75 | 1508 | 3.9 | Pass | Example |
| 10 | J | 82 | 16 | 2 | 0 | Satisfactory | 254 | 66 | 1530 | 6.0 | Pass | Example |
| 11 | K | 74 | 21 | 3 | 2 | Satisfactory | 311 | 66 | 1549 | 62 | Pass | Example |
| 12 | L | 64 | 29 | 3 | 3 | Satisfactory | 393 | 75 | 1553 | 66 | Pass | Example |
| 13 | M | 86 | 12 | 2 | 0 | Satisfactory | 186 | 70 | 1510 | 6.0 | Pass | Example |
| 14 | N | 78 | 19 | 2 | 0 | Satisfactory | 278 | 68 | 1663 | 5.6 | Pass | Example |
| 15 | O | 78 | 18 | 2 | 2 | Satisfactory | 287 | 68 | 1595 | 5.8 | Pass | Example |
| 16 | P | 72 | 23 | 3 | 2 | Satisfactory | 332 | 77 | 1529 | 6.4 | Pass | Example |
| 17 | Q | 86 | 12 | 2 | 0 | Satisfactory | 210 | 70 | 1585 | 5.6 | Pass | Example |
| 18 | **R** | 74 | 21 | 3 | 2 | Satisfactory | 320 | 71 | 1738 | **5.4** | Fail | Comparative Example |

EP 4 477 770 A1

| No. | Steel ID | Area fraction of each phase | | | | Maximum carbide size 400 nm or less | Number density of bainite ($\times 10^{-4}$ /$\mu$m$^3$) | Number ratio of bainite having aspect ratio of 1.8 or more (%) | Tensile properties | | Delayed fracture resistance | Remarks |
| | | Martensite (%) | Bainite (%) | Retained $\gamma$ (%) | Residual microstructure (%) | | | | Tensile strength (MPa) | Uniform elongation (%) | | |
|---|---|---|---|---|---|---|---|---|---|---|---|---|
| 19 | S | 87 | 11 | 2 | 0 | Satisfactory | 168 | 75 | 1400 | 66 | Pass | Comparative Example |
| 20 | T | 55 | 37 | 4 | 4 | Satisfactory | 379 | 80 | 1459 | 7.3 | Pass | Comparative Example |
| 21 | U | 70 | 25 | 3 | 2 | Satisfactory | 362 | 74 | 1615 | 6.1 | Fail | Comparative Example |
| 22 | V | 84 | 13 | 2 | 1 | Satisfactory | 191 | 66 | 1502 | 6.1 | Fail | Comparative Example |
| 23 | W | 67 | 27 | 3 | 3 | Satisfactory | 350 | 69 | 1483 | 69 | Fail | Comparative Example |
| 24 | X | 81 | 16 | 2 | 1 | Satisfactory | 226 | 70 | 1545 | 6.0 | Fail | Comparative Example |
| 25 | Y | 75 | 22 | 3 | 0 | Satisfactory | 321 | 66 | 1573 | 6.1 | Fail | Comparative Example |
| 26 | Z | 69 | 26 | 3 | 1 | Satisfactory | 354 | 73 | 1492 | 68 | Fail | Comparative Example |
| 27 | A | 43 | 26 | 3 | 28 | Satisfactory | 365 | 67 | 904 | 128 | Pass | Comparative Example |
| 28 | A | 44 | 34 | 4 | 18 | Satisfactory | 378 | 73 | 1028 | 11.3 | Pass | Comparative Example |
| 29 | A | 89 | 10 | I | 0 | Satisfactory | 108 | 28 | 1472 | 6.1 | Fail | Comparative Example |
| 30 | D | 46 | 25 | 3 | 26 | Satisfactory | 338 | 72 | 1012 | 11.0 | Pass | Comparative Example |

EP 4 477 770 A1

| No. | Steel ID | Area fraction of each phase | | | | Maximum carbide size 400 nm or less | Number density of bainite ($\times 10^{-4}$ /$\mu$m$^3$) | Number ratio of bainite having aspect ratio of 1.8 or more (%) | Tensile properties | | Delayed fracture resistance | Remarks |
|---|---|---|---|---|---|---|---|---|---|---|---|---|
| | | Martensite (%) | Bainite (%) | Retained $\gamma$ (%) | Residual microstructure (%) | | | | Tensile strength (MPa) | Uniform elongation (%) | | |
| 31 | D | **22** | **62** | **7** | **10** | Satisfactory | 495 | 66 | **1092** | 11.8 | Pass | Comparative Example |
| 32 | D | 77 | 19 | 2 | 2 | Satisfactory | **89** | 86 | 1491 | 6.4 | Fail | Comparative Example |
| 33 | D | **94** | **5** | 1 | 0 | Satisfactory | **55** | 78 | 1611 | **5.1** | Fail | Comparative Example |
| 34 | D | **3** | **76** | **8** | **13** | Satisfactory | 551 | 67 | **941** | 14.7 | Pass | Comparative Example |
| 35 | G | 88 | 11 | 2 | 0 | **Unsatisfactory** | 170 | 69 | **1428** | **5.4** | Pass | Comparative Example |
| 36 | G | 80 | 18 | 2 | 0 | **Unsatisfactory** | 290 | 69 | **1402** | 69 | Pass | Comparative Example |
| 37 | AA | 81 | 16 | 2 | 1 | Satisfactory | 262 | 68 | 1557 | 5.9 | Pass | Example |
| 38 | AB | 79 | 17 | 2 | 2 | Satisfactory | 272 | 69 | 1530 | 6.1 | Pass | Example |
| 39 | H | 82 | 13 | 2 | 3 | Satisfactory | **102** | 70 | 1573 | 5.7 | Fail | Comparative Example |

* Underlined values do not satisfy a range or condition specified in the present disclosure.

EP 4 477 770 A1

As demonstrated in Table 3, tensile strength (TS), uniform elongation, and delayed fracture resistance were acceptable for all of the Examples. Further, the steel sheets of the Examples were used in various shapes of members obtained by various forming processes, including cold pressing, and in various shapes of members obtained by joining processes. In each case, the member had a target shape without cracking or delayed fracture occurring, and had sufficient tensile strength (TS).

In contrast, at least one of tensile strength (TS), uniform elongation, or delayed fracture resistance was insufficient for each of the Comparative Examples.

INDUSTRIAL APPLICABILITY

According to the present disclosure, a steel sheet having a chemical composition with Si content of 1.0 mass% or less, where there is little concern about LME cracking, that simultaneously achieves a TS of 1470 MPa or more, excellent formability, and excellent delayed fracture resistance is obtainable. Further, due to the above properties, the steel sheet is also applicable by cold pressing to various components for which complex shapes are required, thereby contributing to increased component strength and weight reduction more advantageously in terms of cost and productivity.

**Claims**

1. A steel sheet comprising a chemical composition containing, in mass%,

   C: more than 0.20 % and 0.34 % or less,
   Si: 1.0 % or less,
   Mn: 1.6 % or more and 2.4 % or less,
   P: 0.050 % or less,
   S: 0.0050 % or less,
   sol.Al: 0.10 % or less,
   N: 0.010 % or less,
   Ti: more than 0 % and 0.080 % or less, and
   B: more than 0 % and 0.0050 % or less,
   satisfying the following Expression (1), with the balance being Fe and inevitable impurity,
   wherein, in area fractions relative to the entire microstructure,
   martensite is more than 60 % and 90 % or less,
   bainite is 10 % or more and 30 % or less,
   retained austenite is less than 5 %, and
   the balance is 5 % or less,
   maximum size of carbides inside the martensite is 400 nm or less, number density of island regions of the bainite is $120 \times 10^{-4}/\mu m^2$ or more,
   number of island regions of the bainite having an aspect ratio of 1.8 or more as a percentage of the total number of island regions of the bainite is 60 % or more,
   tensile strength is 1470 MPa or more,
   uniform elongation is 5.5 % or more, and

$$[C\%] + [Si\%] / 24 + [Mn\%] / 6 \leq 0.70 \qquad \ldots (1).$$

2. The steel sheet according to claim 1, wherein the chemical composition further contains at least one element selected from Group A, Group B, or Group A and Group B, in mass%,

   Group A consists of
   Cu: 1.00 % or less,
   Ni: 1.00 % or less,
   Mo: 0.50 % or less,
   Cr: 1.00 % or less,
   Zr: 0.100 % or less,
   Ca: 0.0100 % or less,
   Nb: 0.100 % or less,

V: 0.200 % or less,
W: 0.200 % or less,
Sb: 0.100 % or less,
Sn: 0.100 % or less, and
Mg: 0.0100 % or less, and
Group B consists of Se, As, Pb, Bi, Zn, Cs, Rb, Co, La, Tl, Nd, Y, In, Be, Hf, Tc, Ta, O, La, Ce, and Pr, totaling 0.02 % or less.

3. The steel sheet according to claim 1, further comprising a coated or plated layer on a surface.

4. The steel sheet according to claim 2, further comprising a coated or plated layer on a surface.

5. A member made using the steel sheet according to any one of claims 1 to 4.

6. A method of producing a steel sheet, the method comprising:

a hot rolling process of hot rolling a steel slab having the chemical composition according to claim 1 or 2 to produce a hot-rolled steel sheet;
a cold rolling process of cold rolling the hot-rolled steel sheet to produce a cold-rolled steel sheet;
an annealing process of heating the cold-rolled steel sheet at an average heating rate of 3.5 °C/s or more in a temperature range from 50 °C to an annealing temperature, then annealing at the annealing temperature of $A_3$ temperature to $A_3$ temperature + 40 °C for an annealing time of 30 s or more;
a first cooling process of cooling the cold-rolled steel sheet at an average cooling rate of 10 °C/s or more in a temperature range from the annealing temperature to 650 °C;
a holding process of holding the cold-rolled steel sheet in a temperature range from 650 °C to 500 °C for a holding time of 10 s or more to 200 s or less;
a second cooling process of cooling the cold-rolled steel sheet at an average cooling rate of 70 °C/s or more in a temperature range from 500 °C to 50 °C to a cooling stop temperature of 50 °C or less; and
a tempering process of tempering the cold-rolled steel sheet at a tempering temperature of 150 °C to 250 °C for a tempering time of 30 s or more.

7. The method of producing a steel sheet according to claim 6, further comprising a coating or plating treatment process of subjecting the cold-rolled steel sheet to a coating or plating treatment after the tempering process.

8. A method of producing a member, wherein the steel sheet according to any one of claims 1 to 4 is subjected to at least one of a forming process or a joining process to produce the member.

## INTERNATIONAL SEARCH REPORT

| International application No. |
| --- |
| **PCT/JP2022/040837** |

| A. | CLASSIFICATION OF SUBJECT MATTER |
| --- | --- |

***C21D 9/46***(2006.01)i; ***C22C 38/00***(2006.01)i; ***C22C 38/14***(2006.01)i; ***C22C 38/60***(2006.01)i
FI:  C22C38/00 301S; C22C38/00 301T; C22C38/14; C22C38/60; C21D9/46 G; C21D9/46 J

According to International Patent Classification (IPC) or to both national classification and IPC

| B. | FIELDS SEARCHED |
| --- | --- |

Minimum documentation searched (classification system followed by classification symbols)

C21D9/46; C22C38/00; C22C38/14; C22C38/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2021-105197 A (NIPPON STEEL CORP) 26 July 2021 (2021-07-26) | 1-8 |
| A | WO 2019/208556 A1 (NIPPON STEEL CORP) 31 October 2019 (2019-10-31) | 1-8 |

☐ Further documents are listed in the continuation of Box C.  ☑ See patent family annex.

| | |
| --- | --- |
| *  Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **20 December 2022** | **10 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2022/040837**

| Patent document cited in search report | | | Publication date (day/month/year) | Patent family member(s) | | | Publication date (day/month/year) |
|---|---|---|---|---|---|---|---|
| JP | 2021-105197 | A | 26 July 2021 | (Family: none) | | | |
| WO | 2019/208556 | A1 | 31 October 2019 | US | 2021/0262073 | A1 | |
| | | | | EP | 3786310 | A1 | |
| | | | | CN | 112004955 | A | |
| | | | | KR | 10-2020-0140883 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010065272 A
- JP 5365112 B
- JP 5412182 B
- JP 6635236 B

**Non-patent literature cited in the description**

- **T. C. MCILVAINE**. *Journal of Biological Chemistry*, vol. 49 (1), 183-186